# EUROPÄISCHE PATENTSCHRIFT

(11) **EP 0 677 403 B1**
(45) Veröffentlichungstag und Bekanntmachung des Hinweises auf die Patenterteilung: **10.06.1998**
(21) Anmeldenummer: 95103846.2
(22) Anmeldetag: 16.03.1995
(51) Int. Cl.: B60B 17/00

(54) **Schienenrad**
Rail wheel
Roue ferroviaire

(30) Priorität: 16.04.1994 DE 4413308
(43) Veröffentlichungstag der Anmeldung: 18.10.1995
(73) Patentinhaber: EUROCOPTER DEUTSCHLAND GmbH, D-81663 München (DE)
(72) Erfinder: Bansemir, Horst, Dr., D-81825 München (DE); Bongers, Bernd, Dr., D-85551 Kirchheim (DE); Eschbaumer, Hermann, D-83109 Grosskarolinenfeld (DE)
(74) Vertreter: Hummel, Adam

(56) Entgegenhaltungen:
- EP-A- 0 065 086
- BE-A- 408 027
- DE-A- 3 143 845

## Beschreibung

Die Erfindung betrifft ein Schienenrad gemäß dem Oberbegriff des Patentanspruchs 1.

Bei einem derartigen Schienenrad besteht selbstverständlich wie bei den herkömmlichen Gleisfahrzeugrädern (in Ganzmetallbauweise) das Bestreben, den Radreifen nach einem bestimmten Verschleiß seiner Lauffläche und des Spurkranzes auswechseln zu können. Der hierzu bei einem durch die DE-PS 31 43 845 bekannten Schienenrad dieser Gattung vorgesehene metallische Zwischenring hat einerseits zwar den Vorteil, daß der Radreifen in üblicher Weise aufgeschrumpft werden kann. Der für diesen Zwischenring gewählte Verbund mit der Radscheibe über einen darin eingebetteten radialen Ringansatz als Träger von Verankerungsmitteln hat jedoch, abgesehen vom Aufwand einer derartigen Formschlußverbindung "Einbettung", den beträchtlichen Nachteil, daß der Zwischenring bei der Herstellung der Radscheibe, also zugleich mit deren Formgebung integriert werden muß. Dem zufolge wird z.B. beim üblicherweise angewendeten Naßwickeln der Radscheibe eine extrem genaue Positionierung des Zwischenringes zur Radnabe erforderlich.

Der Erfindung liegt daher die Aufgabe zugrunde, bei einem Schienenrad der eingangs genannten Art auf eine Verbindung durch Einbetten zwischen der Radscheibe und dem Zwischenring zu verzichten, ohne die Sicherheit ihrer Verbindung unter Axialkraftbelastung zu mindern.

Diese Aufgabe ist mit den kennzeichnenden Merkmalen des Patentanspruchs 1 gelöst.

Durch die Erfindung wird nicht nur sichergestellt, daß im Grunde die Verbindung des Zwischenringes mit der Radscheibe bei deren Herstellung keine Rolle mehr spielt. Vielmehr werden für die Übertragung der Axialkräfte vom Zwischenring auf die Radscheibe zwei Lastpfade bereitgestellt, d.h. es ist doppelte Verbindungssicherheit gewährleistet. Zum einen ist die Kraftübertragung über die relativ großflächige Klebverbindung zwischen dem Zwischenring bzw. dessen Teilringen und der Radscheibe möglich.

Hierbei hat beim Auftreten von Schubspannungen die Kegelform (der Innenfläche) des Zwischenringes Druckspannungen im Klebstoff und damit eine wesentliche Erhöhung der Belastbarkeit der Klebverbindung (zur Radscheibe) in Schubrichtung zur Folge. Zum anderen kann bei einem Versagen der Klebverbindung die Übertragung der Axialkräfte über die formschlüssigen Kegelflächen von Zwischenring und Radscheibe erfolgen. Für diesen Fall läßt sich durch die im Anspruch 3 gekennzeichnete Weiterbildung des Zwischenringes die Wirksamkeit des Lastpfades noch steigern.

Selbstverständlich empfiehlt sich für gleiche Wirkungen in den beiden (möglichen) Axialkraftwirkungsrichtungen, daß möglichst eine Mittenteilung des Zwischenringes gewählt wird, d.h. eine Teilung in der Radmittelebene in zwei gleiche Teilringe mit halbkegeliger Innenfläche. Alternativ ist je nach Anforderung an das Schienenrad anstelle einer solchen Mittenteilung auch eine außermittige Teilung, z.B. sog. Seitenteilung des Zwischenringes denkbar.

Darüber hinaus sind nach der im Anspruch 2 gekennzeichneten Weiterbildung der Erfindung die vorgenannten Vorteile der doppelten Verbindungssicherheit auch für die Verbindung der Radscheibe mit einer Achswelle nutzbar.

Im übrigen verdeutlichen die in den Ansprüchen 5 bis 7 gekennzeichneten Weiterbildungen, daß der Aufwand für die genaue Positionierung des jeweiligen Zwischenringes auf der Radscheibe relativ gering ist. Dabei ist es ohne Belang, ob die Radscheibe bzw. deren Kunststoffstruktur bei der Positionierung des Zwischenringes bereits ausgehärtet, teilweise oder noch nicht ausgehärtet ist. Letzterenfalls kann zweckmäßig der nicht ausgehärtete Kunstsstoff als Klebstoff der Klebverbindung dienen, wobei die im Anspruch 8 gekennzeichnete Weiterbildung die Ansammlung von überschüssigem Kunststoff (Klebstoff) ermöglicht und damit auch eine Faltenbildung and der Oberfläche der (nicht ausgehärteten) Radscheibe beim Aufschieben der Teilringe verhindert.

Schließlich ist zur Kraftschlußverbindung der beiden Teilringe (miteinander) noch bemerkenswert, daß diese, beispielsweise in der im Anspruch 4 gekennzeichneten Gestaltung, im Grunde bloß den Zusammenhalt der Teilringe beim Auswechseln des Radreifens zu sichern braucht, weil sonst der aufgeschrumpfte Radreifen eine ausreichend belastungsfähige Kraftschlußverbindung der Teilringe miteinander gewährleistet. Das gilt inbesondere im Falle einer sog. Klebschrumpfung, bei welcher der Radreifen mit dem Zwischenring zusätzlich verklebt ist.

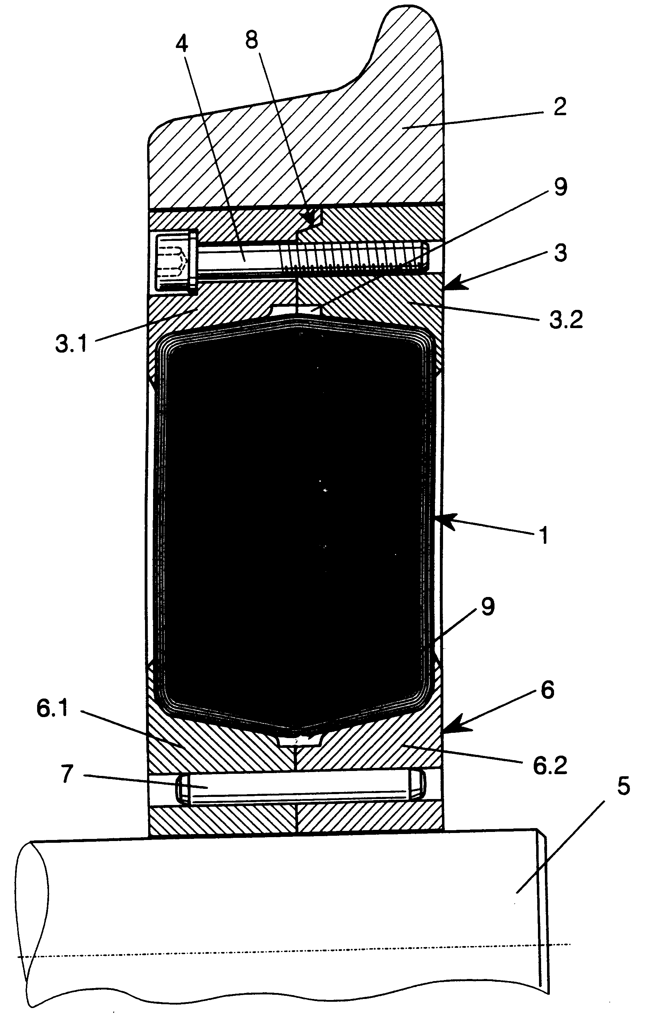

Nachfolgend wird die Erfindung anhand eines Ausführungsbeispieles weiter erläutert. Dabei zeigt die Zeichnung im Radialschnitt zur Hälfte ein Schienenrad in bereifter Ausbildung mit einer Radscheibe 1 aus Kunststoff, welche beispielsweise wie diejenige des Schienenrades gemäß der DE-PS 38 14 343 einen Schaumstoffkern mit zumindest einer äußeren Faserverbundkunststoff-Deckschicht aufweisen kann. Die Verbindung zwischen dieser Radscheibe 1 und einem Radreifen 2 aus Metall ist über einen metallischen Zwischenring 3 hergestelt, auf den der Radreifen 2 aufgeschrumpft ist, vorzugsweise unter Zwischenfügung einer nicht dargestellten Klebstoffschicht (aus den bereits erwähnten Gründen).

Um den Zwischenring 3 erst nach der Gestaltung der Radscheibe 1 aufbringen und dennoch bei den auftretenden Radbelastungen eine ausreichende Verbindungssicherheit gewährleisten zu können, weist die Radscheibe 1 am Umfang ein kegeliges Querschnittsprofil auf und ist der hiermit formschlüssige Zwischenring 3 axial in zwei gleiche Teilringe 3.1, 3.2 mit entsprechend halbkegeliger Innenfläche unterteilt. Dabei stehen die beiden Teilringe 3.1, 3.2 miteinander infolge der Aufschrumpfung des Radreifens 2 in einer kraftschlüssigen Verbindung; eine solche wird im Falle des Reifenwechsels durch eine Verbindung mittels Schrauben 4 gewährleistet. Außerdem sind die beiden Teilringe 3.1, 3.2 mit der Radscheibe 1 verklebt. Sollte diese (nicht dargestellte) Klebverbindung als sog. erster Lastpfad versagen, erfolgt die Axialkraftübertragung vom Zwischenring 3 auf die Radscheibe 1 über deren formschlüssige Kegelfächen. Für diesen Fall ist aufgrund einer Überlappung der Stirnseiten der Radscheibe 1 durch die Teilringe 3.1, 3.2 zusätzlich der Zwischenring 3 eine axiale Fassung der Radscheibe 1 an deren Umfang.

Wie der Zeichnung weiter entnehmbar ist, sitzt das Schienenrad vorzugsweise mit Schrumpfsitz auf einer Achswelle 5 aus Metall, weshalb entsprechend der vorbeschriebenen Verbindung (zwischen dem Radreifen und der Radscheibe) auch die Verbindung zwischen der Radscheibe 1 und der Achswelle 5 über einen (weiteren) Zwischenring 6 aus Metall hergestellt ist. Dem gemäß hat die Radscheibe 1 auch nabenseitig ein kegeliges Querschnittsprofil und ist der hiermit formschlüssige weitere Zwischenring 6 in zwei gleiche Teilringe 6.1, 6.2 mit (der Radscheibennabe) entsprechend halbkegeliger Außenfläche unterteilt, wobei die beiden Teilringe 6.1, 6.2 miteinander in kraftschlüssiger Verbindung stehen und mit der Radscheibe 1 (in nicht dargestellter Weise) verklebt sind. Auch hier kann zusätzlich eine (nicht dargestellte) Klebverbindung zwischen der Achswelle 5 und dem weiteren Zwischenring 6 vorgesehen sein und ferner eine (nicht dargestellte) Verbindung der Teilringe durch Schrauben für den Fall eines Radwechsels.

Schließlich zeigt die Zeichnung noch Möglichkeiten der einfachen genauen Positionierung der Teilringe 3.1, 3.2 und 6.1, 6.2 auf der Radscheibe 1, und zwar durch eine Zentrierung entweder mittels Paßstifte 7 in Zentrierbohrungen des (weiteren) Zwischenringes 6 bzw. seiner Teilringe 6.1, 6.2 oder durch eine zentrierende Form 8 der gegeneinanderstoßenden Flächen der beiden Teilringe 3.1, 3.2 des (ersten) Zwischenringes 3. Selbstverständlich ist die dargestellte Zentrierung für den betreffenden Zwischenring 3 oder 6 nicht zwingend, kann also ebenso umgekehrt gewählt oder bei beiden Zwischenringen 3 und 6 gleich sein. Des weiteren ist die Gestaltung des einzelnen Zwischenringes 3 und 6 nicht auf die Kreisringform beschränkt. Es sind also auch polygon-, trochoidenförmige und andere Ringprofile denkbar, sofern auch Kräfte in Umfangsrichtung oder in Wellenrichtung wirkende Momente in "fail-safe Charakteristik" übertragen werden können sollen.

Die letztlich dargestellte Nut 9 über der Kegel spitze der Radscheibe 1, welche die beiden Teilringe 3.1, 3.2 und. 6.1, 6.2 der Zwischenringe 3 bzw. 6 an ihrer Stoßstelle begrenzen, erfüllt die eingangs bereits erwähnte Sammlungsfunktion für überschüssigen Radscheiben-Kunststoff, falls die Teilringe auf der noch unausgehärteten Radscheibe 1 aufgebracht werden sollen.

## Patentansprüche

1. Schienenrad mit einer Radscheibe aus Kunststoff und einem Radreifen aus Metall, welche miteinander über einen metallischen Zwischenring verbunden sind, auf den der Radreifen aufgeschrumpft ist, **dadurch gekennzeichnet,** daß die Radscheibe (1) am Umfang ein kegeliges Querschnittsprofil aufweist und der hiermit formschlüssige Zwischenring (3) axial in zwei Teilringe (3.1, 3.2) mit entsprechend teilkegeliger Innenfläche unterteilt ist, welche miteinander in kraftschlüssiger Verbindung stehen und mit der Radscheibe (1) verklebt sind.

2. Schienenrad nach Anspruch 1 auf einer Achswelle aus Metall, **dadurch gekennzeichnet,** daß die Radscheibe (1) auch nabenseitig ein kegeliges Querschnittsprofil aufweist und über einen weiteren hiermit formschlfüssigen Zwischenring (6) aus Metall mit der Achswelle (5) verbunden ist, der in zwei Teilringe (6.1, 6.2) mit der Radscheibennabe entsprechend teilkegeliger Außenfläche unterteilt ist, und die Teilringe (6.1, 6.2) miteinander in kraftschlüssiger Verbindung stehen und mit der Radscheibe (1) verklebt sind.

3. Schienenrad nach Anspruch 1 oder 2, **dadurch gekennzeichnet,** daß der Zwischenring (3; 6) eine axiale Fassung der Radscheibe (1) an deren Umfang bzw. Nabe bildet.

4. Schienenrad nach Anspruch 1 oder 2, **gekennzeichnet** durch eine Schraubverbindung (4) der Teilringe (3.1, 3.2).

5. Schienenrad nach Anspruch 1 oder 2, **dadurch gekennzeichnet,** daß die beiden Teilringe (3.1, 3.2; 6.1, 6.2) des Zwischenringes (3; 6) zentriert sind.

6. Schienenrad nach Anspruch 5, **gekennzeichnet** durch eine Zentrierung durch Paßstifte (7) in Zentrierbohrungen des Zwischenringes (6) bzw. seiner Teilringe (6.1, 6.2).

7. Schienenrad nach Anspruch 5, **gekennzeichnet** durch eine zentrierende Form (8) der gegeneinanderstoßenden Flächen der beiden Teilringe (3.1, 3.2).

8. Schienenrad nach Anspruch 1 oder 2 und 7, **dadurch gekennzeichnet,** daß die beiden Teilringe (3.1, 3.2; 6.1, 6.2) an ihrer Stoßstelle über der Kegelspitze der Radscheibe (1) eine Nut (9) begrenzen.

## Claims

1. Rail wheel comprising a wheel disc made of plastic and a wheel tyre made of metal which are joined together via a metal intermediate ring onto which the wheel tyre is shrunk on, **characterised in that** the wheel disc (1) has at its periphery a conical cross-sectional profile, and a thereto positively connected intermediate ring (3) is axially divided into two ring portions (3.1, 3.2) with respective part-conical inside surface which are positively joined to each other and glued to the wheel disc (1).

2. Rail wheel according to Claim 1 on an axial shaft of metal, **characterised in that** the wheel disc (1) also has a cross-sectional profile at the hub and is via a further thereto positively connected intermediate ring (6) of metal connected to the axial shaft (5) which is divided into two ring portions (6.1, 6.2) of partially conical outer surface to correspond with the wheel disc hub, and the ring portions (6.1, 6.2) are positively joined to each other and are glued to the wheel disc (1).

3. Rail wheel according to Claim 1 or 2, **characterised in that** the intermediate ring (3; 6) forms an axial socket of the wheel disc (1) at its periphery or hub.

4. Rail wheel according to Claim 1 or 2, **characterised by** a screw connection (4) of the ring portions (3.1, 3.2).

5. Rail wheel according to Claim 1 or 2, **characterised in that** both ring portions (3.1, 3.2; 6.1, 6.2) of the intermediate ring (3; 6) are centred.

6. Rail wheel according to Claim 5, **characterised by** centring by means of dowel pins (7) in centring bores of the intermediate ring (6) or its ring portions (6.1, 6.2).

7. Rail wheel according to Claim 5, **characterised by** a centring form (8) of abutting surfaces of both ring portions (3.1, 3.2).

8. Rail wheel according to Claim 1 or 2 and 7, **characterised in that** both ring portions (3.1, 3.2; 6.1, 6.2) define a groove (9) at their joint above the cone tip of the wheel disc (1).

## Revendications

1. Roue ferroviaire comportant un centre de roue en matière plastique et un bandage de roue en métal qui sont liés l'un à l'autre au moyen d'une bague intermédiaire métallique sur laquelle le bandage de roue est fretté, caractérisée par le fait que le centre de roue (1) présente au niveau de sa périphérie un profil en section transversale conique et que la bague intermédiaire (3) liée à celui-ci par complémentarité de formes est divisée dans la direction axiale en deux parties de bagues (3.1, 3.2) avec une surface intérieure à conformation en partie de cône adaptée, qui sont liées l'une à l'autre par serrage et sont collées au centre de roue (1).

2. Roue ferroviaire selon la revendication 1 montée sur un corps d'essieu en métal, caractérisée par le fait que le centre de roue (1) présente côté moyeu également un profil en section transversal conique et est lié au corps d'essieu (5) par une bague intermédiaire (6) supplémentaire en métal qui est liée par complémentarité de formes au centre de roue et est divisée en deux parties de bagues (6.1, 6.2) avec une surface extérieure à conformation en partie de cône adaptée et que les parties de bagues (6.1, 6.2) sont liées l'une à l'autre par serrage et sont collées au centre de roue (1).

3. Roue ferroviaire selon la revendication 1 ou 2, caractérisée par le fait que la bague intermédiaire (3; 6) forme une sertissure axiale du centre de roue (1) au niveau de sa périphérie ou de son moyeu.

4. Roue ferroviaire selon la revendication 1 ou 2, caractérisée par une liaison vissée (4) des parties de bague (3.1, 3.2).

5. Roue ferroviaire selon la revendication 1 ou 2, caractérisée par le fait que les deux parties de bague (3.1, 3.2; 6.1, 6.2) de la bague intermédiaire (3, 6) sont centrées.

6. Roue ferroviaire selon la revendication 5, caractérisée par un centrage au moyen de goupilles (7) ajustées insérées dans des trous de centrage de la bague intermédiaire (6) ou des parties de bagues (6.1, 6.2) de celle-ci.

7. Roue ferroviaire selon la revendication 5, caractérisée par une forme (8) assurant le centrage des surfaces en contact réciproque des deux parties de bague (3.1, 3.2).

8. Roue ferroviaire selon revendication 1 ou 2 et 7, caractérisée par le fait que les deux parties de bague (3.1, 3.2; 6.1, 6.2) définissent une gorge (9) au niveau de leur point de jonction, au-dessus du sommet de cône du centre de roue (1).
